# EUROPEAN PATENT SPECIFICATION

(11) **EP 2 462 408 B1**
(45) Date of publication and mention of the grant of the patent: **13.05.2020**
(21) Application number: 10806751.3
(22) Date of filing: 04.08.2010
(51) Int. Cl.: G01P 15/125, G01P 15/18, G01C 19/5719, G01C 19/5712, G01P 15/08

(54) **MICROMACHINED INERTIAL SENSOR DEVICES**
MIKROMECHANISCH HERGESTELLTE TRÄGHEITSSENSORVORRICHTUNGEN
DISPOSITIFS CAPTEUR INERTIEL MICRO-USINÉS

(30) Priority: 04.08.2009 US 273494 P; 03.08.2010 US 849742
(43) Date of publication of application: 13.06.2012
(73) Proprietor: Fairchild Semiconductor Corporation, San Jose, CA 95134 (US)
(72) Inventor: ACAR, Cenk, irvine, California 92612 (US)
(74) Representative: Schmidt, Steffen J.
(86) International application number: PCT/US2010/002166
(87) International publication number: WO 2011/016859

(56) References cited:
- EP-A1- 1 860 402
- EP-A2- 1 688 705
- WO-A1-2008/059757
- US-A1- 2003 061 878
- US-A1- 2004 211 258
- US-A1- 2008 202 237
- US-A1- 2008 245 148
- US-A1- 2009 064 780

## Description

### BACKGROUND OF THE INVENTION

The present invention generally relates to inertial sensor devices and, more particularly, to micromachined inertial sensor devices.

With the rapid advance of modern electronic technology, various electronic devices, such as navigation systems, cell phones, and electronic games, require sensors that can accurately determine motions of the devices at low cost with small form factor. Conventional techniques have been developed to bump micro-electromechanical-systems (MEMS) chips on ASIC wafers or integrate MEMS with ASIC wafers. However, majority of the existing MEMS sensors measure either acceleration or rotation, but not the 6 degrees-of-freedom (three independent accelerations and three independent rotations) of an object. As such, the existing ASIC wafers for detecting the motion of an object in 6 DOF have large form factors to accommodate multiple MEMS sensors and extra circuits or algorithms to handle the data received from the multiple sensors. Furthermore, fabrication of multiple MEMS and packaging/integration of MEMS with ASIC wafers increase the manufacturing cost of the sensor devices. Thus, there is a need for a single MEMS device that can detect the motion of an object in 6 DOF so that the overall form factor and manufacturing cost of a sensor device that contains the MEMS can be significantly reduced.

US 2004/0211258 A discloses a six degree-of-freedom micromachined multi-sensor that provides three axes of acceleration sensing, and three axes of angular rate sensing, in a single multi-sensor device. The six degree-of-freedom multi-sensor device includes a first multi-sensor substructure providing two axes of acceleration sensing and one axis of angular rate sensing, and a second multi-sensor substructure providing a third axis of acceleration sensing, and second and third axes of angular rate sensing. The first and second multi-sensor substructures are implemented on respective substrates within the six degree-of-freedom multi-sensor device.

US 2009/0064780 A1 discloses a driving mass of an integrated microelectromechanical structure that is moved with a rotary motion about an axis of rotation. A sensing mass is connected to the driving mass via elastic supporting elements so as to perform a detection movement in the presence of an external stress. The driving mass is anchored to a first anchorage arranged along the axis of rotation by first elastic anchorage elements. The driving mass is also coupled to a pair of further anchorages positioned externally thereof and coupled to opposite sides with respect to the first anchorage by further elastic anchorage elements; the elastic supporting elements and the first and further elastic anchorage elements render the driving mass fixed to the first sensing mass in the rotary motion, and substantially decoupled from the sensing mass in the detection movement, the detection movement being a rotation about an axis lying in a plane.

US 2008/0202237 A1 discloses a sensor with a suspended mechanical resonator responsive to one of a linear acceleration and an angular velocity of the sensor such that a first area and a second area are subjected to opposite elongation movements and responsive to the other such that the first area and the second area are subjected to a common elongation movement. A first mechanical-electrical interface interacting with the first area is provided. Also, a second mechanical-electrical interface interacting with the second area is provided. A common mode signal generator is coupled to the mechanical-electrical interfaces with a common mode signal output. A differential mode signal generator is coupled to the mechanical-electrical interfaces with a differential mode signal output. Further, a first processing circuit is coupled to the differential mode output, with an output for a first processed signal; and a second processing circuit is coupled to the common mode output with an output for a second processed signal.

US 2008/0245148 A1 discloses an inertial sensor. The inertial sensor includes an oscillator that is supported by an elastic supporting member such that the oscillator is floating relative to a base. The oscillator is displaceable along a single axis, and a displacement detection unit is provided for detecting a displacement of the oscillator. The oscillation of the oscillator is a simple harmonic motion along a first axis. A second axis, a third axis, and the first axis serve as reference axes of an oscillation coordinate system for the oscillator. These axes are shifted to provide three new axes, serving as new reference axes. Position coordinates of the oscillator with respect to the new axes are determined in at least two points during one period of the oscillator. A difference vector is calculated on the basis of the determined position coordinates. An angular velocity or acceleration is obtained using the difference vector.

### SUMMARY OF THE INVENTION

A sensor according to the present invention is provided in claim 1.

These and other features, aspects and advantages of the present invention will become better understood with reference to the following drawings, description and claims.

### BRIEF DESCRIPTION OF THE DRAWINGS

FIG. 1 shows a schematic cross sectional view of a multi-DOF device in accordance with one embodiment of the present invention;
FIG. 2 shows a schematic top view of a sensor of the multi-DOF device in FIG. 1;
FIG. 3A shows an enlarged view of a comb drive electrode of the sensor in FIG. 2;
FIG. 3B shows an enlarged view of a y-axis accelerometer electrode of the sensor in FIG. 2;
FIG. 4A shows the single mass in FIG. 2 under a gyroscope drive operational mode;
FIG. 4B shows the single mass in FIG. 2 during the sense motion in response to rotation about the x-axis;
FIG. 4C shows the single mass in FIG. 2 during the sense motion in response to rotation about the y-axis
FIG. 4D shows the single mass in FIG. 2 during the sense motion in response to rotation about the z-axis;
FIGS. 5A and 5B show the single mass under linear accelerations in the x and z directions, respectively;
FIG. 6 shows a schematic top view of gyro electrodes underneath the device layer for measuring out-of-plane motions of the sensor in FIG. 2;
FIG. 7 shows an enlarged view of the flexure structure that allows x-axis gyro sense and z-axis accelerometer sense motions;
FIG. 8 shows a schematic top view of another embodiment of a sensor in accordance with the present invention;
FIG. 9A shows a schematic top view of yet another embodiment of a sensor in accordance with the present invention; and
FIG. 9B shows an enlarged view of the flexure structures of the sensor in FIG. 9A.

### DETAILED DESCRIPTION OF THE INVENTION

The following detailed description is of the best currently contemplated modes of carrying out the invention. The description is not to be taken in a limiting sense, but is made merely for the purpose of illustrating the general principles of the invention because the scope of the invention is best defined by the appended claims.

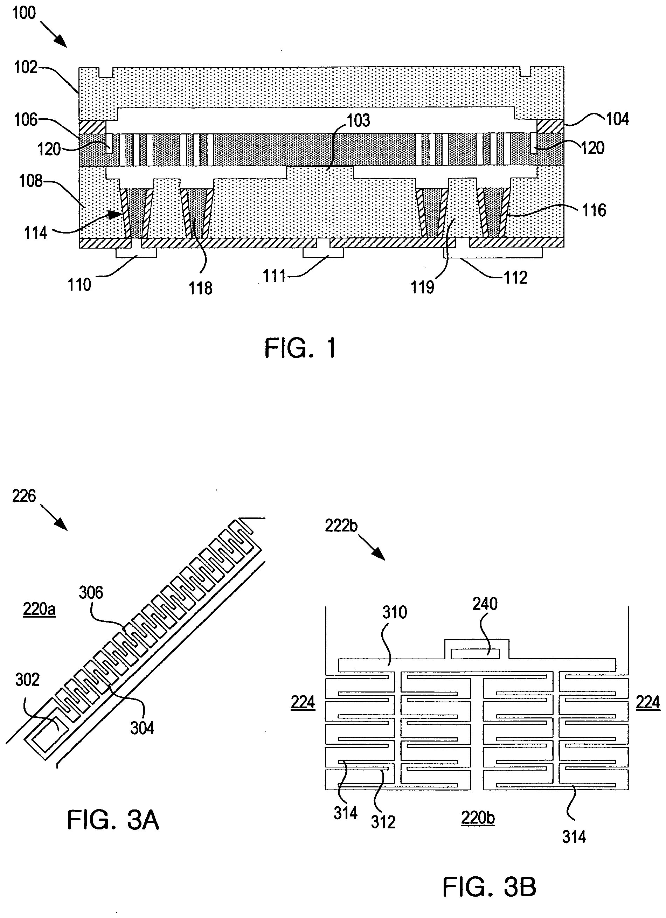

FIG. 1 shows a schematic cross sectional view of a multi-DOF device 100. As depicted, the multi-DOF device 100 includes a cap wafer 102; a device layer (or, equivalently, MEMS layer or micromachined structure layer) 106 that includes micromachined structures (or, MEMS structures); and a via wafer 108. The cap wafer 102 may be metal bonded to the device layer 106, where the metal bonding 104 can generate thermal stress between the cap wafer 102 and the device layer 106 during operation. To isolate the micromachined structures from the thermal stress, a stress reducing groove 120 can be formed around the perimeter of the device layer 106. The metal bond 104 may be a non-high temperature fusion bond and enable the application of getter to maintain a long term vacuum and application of an anti-stiction coating to prevent stiction that could occur to low-g acceleration sensors. The via wafer 108 may be fusion bonded, such as silicon-silicon fusion bonded, to the device layer 106, obviating thermal stress between the via wafer 108 and the device layer 106.

The via wafer 108 may include a protruding portion (or, equivalently, anchor) 103 that is located substantially at the center of the via wafer 108 and provides an anchoring (attaching) structure for the device layer 106. The anchor 103 may be fusion bonded to the device layer 106, to thereby eliminate potential problems associated with metal fatigue.

Sensors formed in the device layer 106 measure changes in capacitance to detect angular displacements. As such, any external electric or magnetic field may affect the accuracy in the measurement of the angular displacements. To shield the external electric and magnetic fields, the device layer 106 and the cap wafer 102 are electrically connected to each other and preferably grounded.

The via wafer 108 includes multiple regions separated by isolating trenches (or, equivalently, vias) 114. Each via 114 is filled with conductive non-crystalline material 118, such as polysilicon or metal. The conductive material 118 is electrically insulated by dielectric material 116, and can be electrically biased to the voltage at the electrode, to create a zero voltage differential and thereby to eliminate the shunt capacitance of the via.

Each of the regions separated by the isolating trenches 114 has an electrical contact for data communication. For example, as depicted in FIG. 1, the via wafer 108 may include three contacts 110, 111, and 112 that may be connected to an ASIC wafer by bumps or wire-bonds. In another example, the contact 110 may be an electrode contact that is connected to the via 114, while the contact 111 may be an anchor contact electrically connected to the anchor 103, and the contact 112 is a circular via contact electrically connected to an isolated region (or, island) 119. Detailed description of the vias and isolated regions is disclosed in a copending US Patent Application No. 12/849,787, entitled "Micromachined devices and fabricating the same," filed on August 3, 2010.

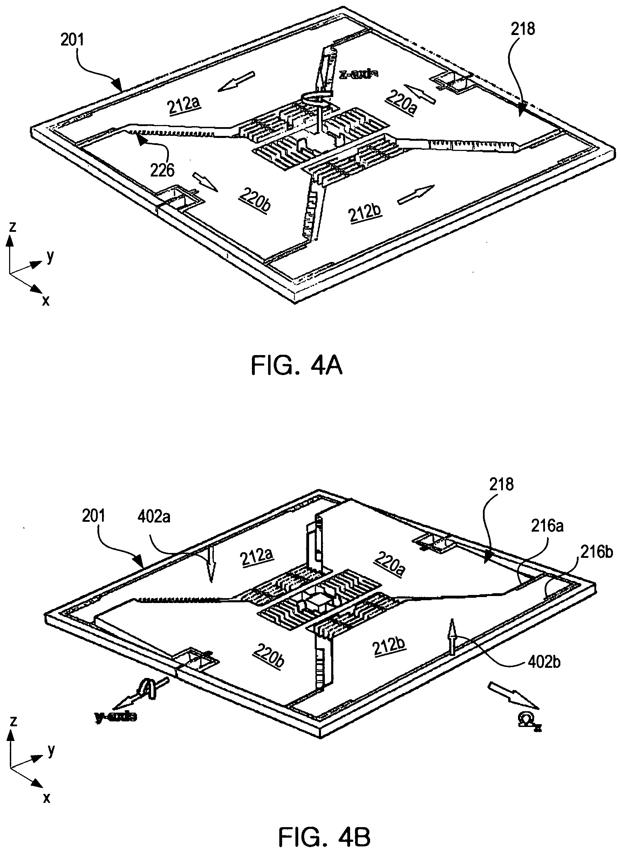

The device layer 106 may include a micromachined structure that functions as gyroscopes and acceleration sensors. Electrical connections to the micromachined structure is achieved through anchors 103 and by capacitive coupling between isolated regions of the via wafer 108 and the device layer 106. Detailed description of the micromachined structure operation is given below in conjunction with FIGS. 4A - 5B

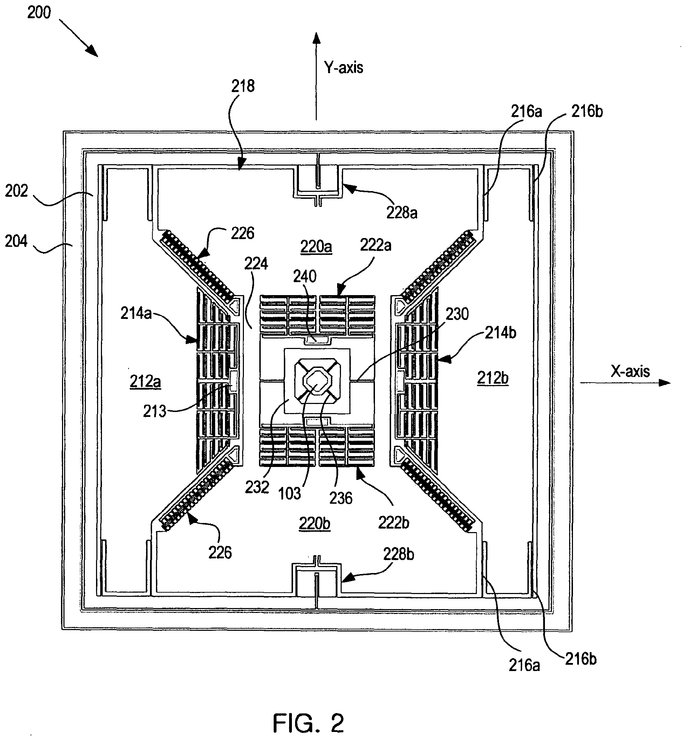

FIG. 2 shows a schematic top view of a micromachined integrated 6-axis inertial measurement device (or, equivalently, micromachined device or sensor) 200 that is included in the device layer (or micromachined layer) 106 in FIG. 1. As depicted, the sensor 200 includes a seal frame 204 that is bonded to the via frame 108 and the cap frame 102; a proof-mass outer frame 202; a pair of x-axis planar proof mass sections (or, shortly, x-axis proof mass sections) 212a and 212b; and a y-axis planar proof mass section (or shortly, y-axis proof mass section) 218. Each of the x-axis proof mass sections 212a and 212b is attached/suspended to the proof-mass outer frame 202 by two pairs of z-axis gyroscope flexures 216a and 216b, and includes an x-axis accelerometer / z-axis gyroscope electrode 214a (or 214b). Each of the pair of x-axis proof mass sections 212a and 212b and the y-axis proof mass section 218 is formed in a substantially plate. Each of the z-axis gyroscope flexures 216a and 216b has a uniform bar or beam shape.

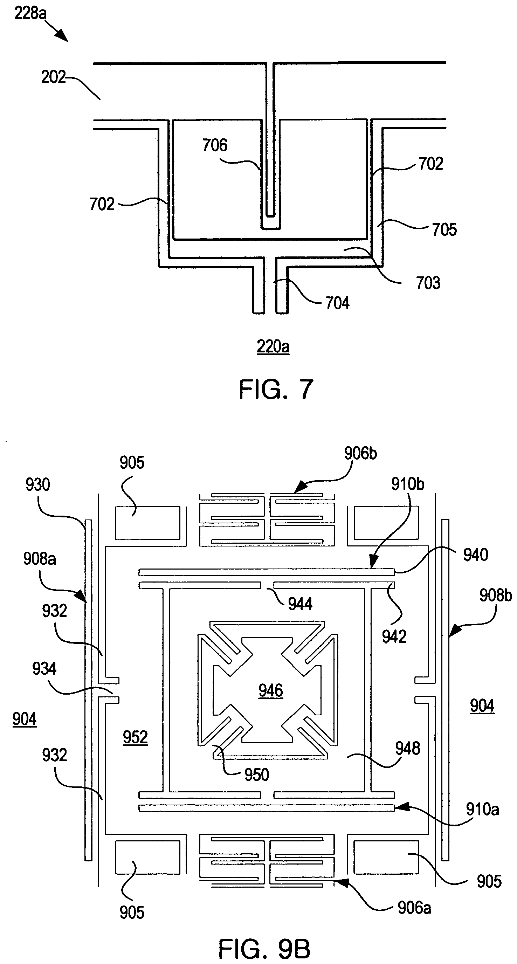

The y-axis proof mass section 218 includes two wing portions 220a and 220b that are connected with the elongated portions 224 that form an integral body. The y-axis proof mass section 218 is attached to the frame 202 by a pair of x-axis gyroscope flexures 228a and 228b, where the flexures are described in conjunction with FIG. 7. The elongated portions 224 are attached to a drive decoupling frame 232 via two y-axis gyroscope flexures 230. The wing portion 220a (or 220b) includes a y-axis electrode 222a (or 222b) and comb drive electrodes 226. As discussed below, the proof-mass outer frame 202, the pair of planar x-axis proof mass sections 212a and 212b, and the y-axis proof mass section 218 are driven simultaneously during a driving operational mode. As such, hereinafter, the term "a single proof-mass" collectively refers to the proof-mass outer frame 202, the pair of x-axis proof mass sections 212a and 212b; and the y-axis proof mass section 218.

The sensor 200 also includes an anchor 103 that is disposed substantially at the center of the sensor and affixed to the via wafer 108. The drive decoupling frame 232 is connected to the anchor 103 by four drive suspension beams 236.

FIG. 3A shows an enlarged view of the comb drive electrode 226 of the sensor 200 in FIG. 2, where the comb drive electrode 226 is used to drive the x-axis and y-axis proof mass sections to oscillate at a single drive frequency about the z-axis. As depicted, the comb electrode 226 includes stationary fingers 304 connected to an anchor 302 and moving comb fingers 306 connected to 220a. The anchor 302 is affixed to the via wafer 108, causing the stationary fingers 304 to be fixed in space during operation. The anchor 302 may have any suitable polygonal shape, such as rectangle, triangle, and pentagon. The moving fingers 306, which interdigitate with the stationary fingers 304. During operation, electrical signals at the drive frequency are applied to the stationary fingers 304 via the anchor 302. Then, due to the interaction between the stationary fingers 304 and the moving comb fingers 306, the y-axis proof mass section 218 and the x-axis proof mass sections 212a and 212b oscillate at the drive frequency, as discussed below in conjunction with FIG. 4A.

FIG. 3B shows an enlarged view of the y-axis accelerometer electrode (or, equivalently, y-axis acceleration transducer or y-axis accelerometer comb fingers) 222b of the sensor 200 in FIG. 2, where the y-axis accelerometer electrode 222b monitors the motions of the y-axis proof mass section 218 in response to y-axis acceleration. As depicted, the y-axis accelerometer electrode 222b includes a plurality of spaced apart, parallel input electrodes or plates 312 and corresponding number of stationary electrodes or plates 314 that interdigitate with the input plates 312. The stationary plates 314 extend from a stator 310 that is secured to an anchor 240, while the input plates 312 extend from the elongated portions 224 of the y-axis proof mass section 218. When the y-axis proof mass section 218 moves relative to the stationary plates 314, the electrical interaction (or, capacitance) between the stationary plates 314 and the input plates 312 changes. The change in capacitance is monitored to measure the motion of the y-axis proof mass section 218.

The x-axis accelerometer electrodes (or, equivalently, x-axis acceleration transducers or x-axis accelerometer comb fingers) 214a and 214b have the similar structure as the y-axis electrode 222b. As such, for brevity, the detailed description of the x-axis electrodes 214a and 214b are not repeated. For instance, the x-axis accelerometer electrode 214a includes a plurality of spaced apart, parallel input electrodes or plates and corresponding number of stationary electrodes or plates that interdigitate with the input plates. The stationary plates are connected to the anchor 213, while the input electrodes extend from the x-axis proof mass section 212a.

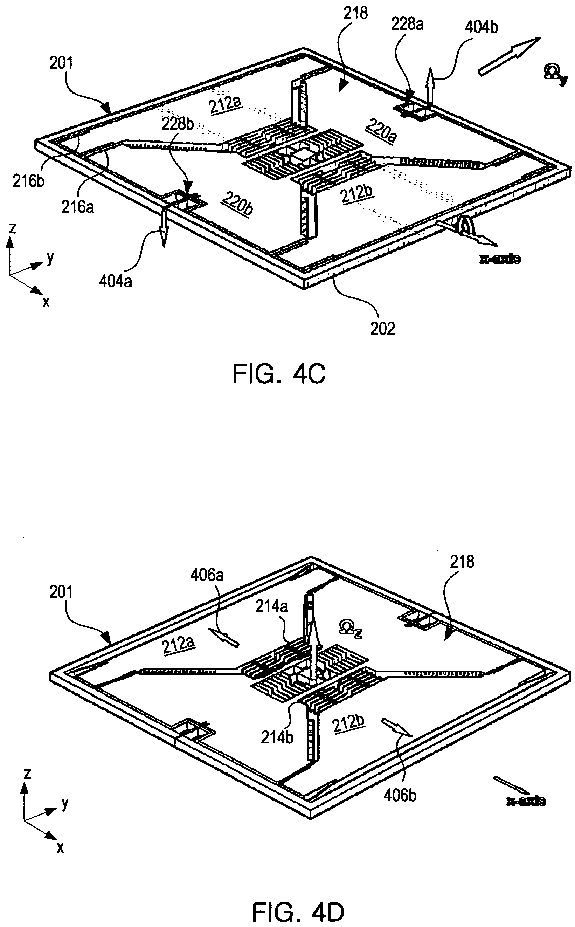

The x-axis accelerometer electrodes 214a and 214b can be used to measure rotational motions about the z-axis, as described in conjunction with FIG. 4D. Optionally, a separate z-axis gyro electrodes may be formed in the area where the x-axis accelerometer electrodes are disposed.

FIG. 4A shows the single proof-mass 201 under the gyroscope drive operational mode, where the single proof-mass collectively refers to the proof-mass outer frame 202, the pair of planar x-axis proof mass sections 212a and 212b, and the y-axis proof mass section 218. As depicted, the comb drive electrodes 226 are driven to make the wing portions 220a and 220b of the y-axis proof mass section 218 oscillate in an anti-phase fashion along the X and Y directions respectively, resulting in torsional motions (or rotations) of the single proof-mass 201 with respect to the z-axis at a preset drive frequency. The torsional motions cause the drive suspension beams 236 (shown in FIG. 2) to bend in a flexible manner, to thereby provide restoring torques to the x-axis and y-axis proof mass sections.

FIG. 4B shows the single proof-mass 201 during the sense motion in response to rotation about the x-axis. As discussed above with reference to FIG. 4A, x-axis proof mass sections 212a and 212b are driven to oscillate about the z-axis by exciting the comb drive electrodes 226 at a preset drive frequency. When the x-axis proof mass sections 212a and 212b are rotated at an angular rate about the x-axis, i.e., the single proof-mass 201 is externally disturbed at an angular rate of Ωx, an out-of-plane Coriolis force is generated for the single proof-mass 201 by the combination of the driving oscillation and the rotation at Ωx. The Coriolis force causes the single proof-mass 201 to be torsionally excited about the y-axis. Also, as the x-axis proof mass sections 212a and 212b are suspended to the proof-mass outer frame 202 via the z-axis gyroscope flexures 216a and 216b, the Coriolis force causes the x-axis proof mass sections 212a and 212b to move in opposite directions, as indicated by arrows 402a and 402b.

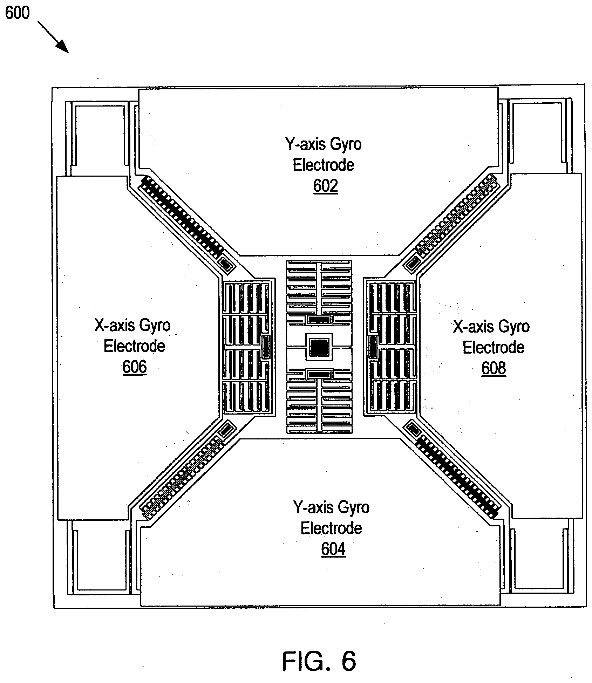

The motion of the x-axis proof mass sections 212a and 212b can be detected by x-axis gyro electrodes 606 and 608 (shown in FIG. 6). More specifically, the variation of the capacitance between the x-axis gyro electrodes 606 and 608 and the corresponding x-axis proof mass sections 212a and 212b are measured to detect the Coriolis force, to thereby measure the angular rate Ωx of the single proof-mass 201.

FIG. 4C shows the single proof-mass 201 during the sense motion in response to rotation about the y-axis. As discussed above with reference to FIG. 4A, the y-axis proof mass section 218 is driven to oscillate about the z-axis by exciting the comb drive electrodes 226 at a preset drive frequency. When the single proof-mass 201 is rotated at an angular rate about the y-axis, i.e., the single proof-mass 201 is externally disturbed at an angular rate of Ωy, an out-of-plane Coriolis force is generated for the y-axis proof mass section 218 by the combination of the drive oscillation and rotation at Ωy. The Coriolis force causes the single proof-mass 201 to be torsionally excited about the x-axis. Also, as the y-axis proof mass section 218 is connected to the drive decoupling frame 232 (shown in FIG. 2) via the y-axis gyroscope flexures 230, the Coriolis force causes the y-axis gyroscope flexures 230 to rotate about the x-axis, as indicated by arrows 404a and 404b. The y-axis gyroscope flexures 230 provide a restoring torque to the y-axis proof mass section 218.

The motion of the y-axis proof mass section 218 can be detected by y-axis gyro electrodes 602 and 604 (shown in FIG. 6). More specifically, the variation of the capacitance between the y-axis gyro electrodes 602 and 604 and the corresponding wing portions 220a and 220b of the y-axis proof mass section 218 are measured to detect the Coriolis force, to thereby measure the angular rate Ωy of the single proof-mass 201.

FIG. 4D shows the single proof-mass 201 during the sense motion in response to rotation about the z-axis. When the x-axis proof mass sections 212a and 212b are subject to an angular rate about the z-axis, at an angular rate of Ωz, the opposite velocities of the x-axis proof mass sections 212a and 212b induce opposing in-plane Coriolis forces in the x-direction, as indicated by arrows 406a and 406b. The x-axis proof mass section 212a and the x-axis proof mass section 212b oscillate in an anti-phase fashion in the x-direction due to the opposite directions of Coriolis forces. The motions of the x-axis proof mass sections 212a and 212b can be detected by the x-axis accelerometer electrodes 214a and 214b, or separate similar electrodes disposed in the same area.

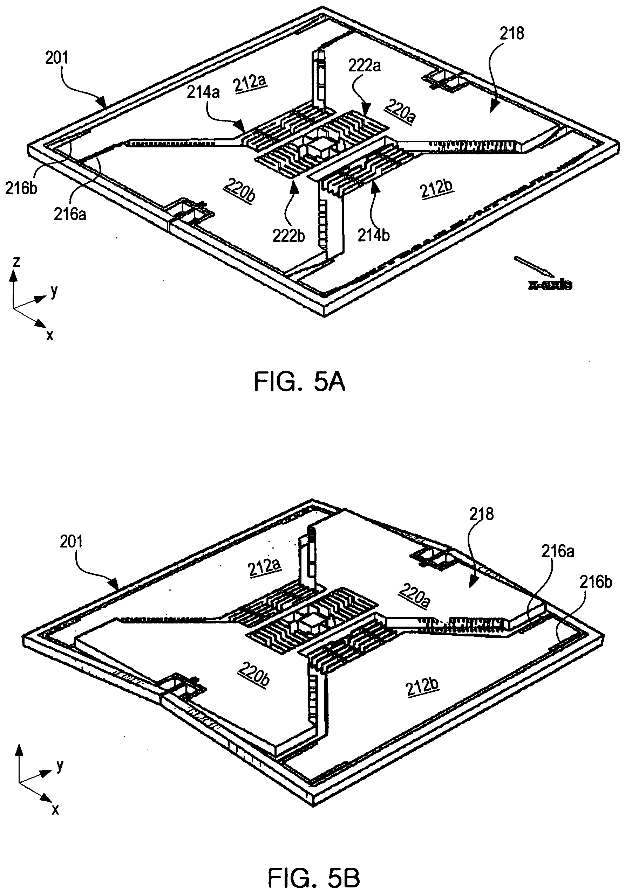

FIG. 5A shows the single proof-mass 201 under linear acceleration in the x direction. When the x-axis proof mass sections 212a and 212b are accelerated along the x-direction, the x-axis proof mass sections 212a and 212b move in-phase along the x-axis. The z-axis gyroscope flexures 216a and 216b deform under the linear acceleration along the x-direction. The variation of the capacitance of the x-axis accelerometer electrodes 214a and 214b are measured to detect the motions of the x-axis proof mass sections 212a and 212b. The x-axis accelerometer electrodes 214a and 214b can measure the acceleration in the x-direction as well as the angular rate in the z-direction.

The linear acceleration of the single proof-mass 201 along the y-direction is measured by the similar manner as the linear acceleration along the x-direction is measured. The motion of the y-axis proof mass section 218 is detected by measuring variation of the capacitance of the y-axis accelerometer electrodes (or, y-axis comb finger sensors) 222a and 222b. The y-axis accelerometer electrodes 222a and 222b can be dedicated to measure accelerations in the y-axis direction. The x-axis gyroscope flexures 228a and 228b deform under linear acceleration in the y-axis direction.

FIG. 5B shows the single proof-mass 201 under linear acceleration in the z-direction. Each of the x-axis proof mass sections 212a and 212b is suspended to the proof-mass outer frame 202 via two z-axis gyroscope flexures 216a and 216b, while the proof mass outer fame 202 is suspended to the y-axis proof mass section 218 by x-axis gyroscope flexures 228a and 228b. Thus, when the single proof-mass 201 is accelerated along the z-direction, the x-axis proof mass sections 212a and 212b move in-phase in the z-direction, while the y-axis proof mass section 218 stays still. Accordingly, the motion or acceleration of the x-axis proof mass sections 212a and 212b can be measured by the x-axis gyroscope electrodes 606 and 608 (shown in FIG. 6). In an alternative embodiment, a dedicated z-axis electrode (not shown in FIG. 5B) can be included in the sensor 200 so that the acceleration in the z-direction can be measured without using the x-axis gyroscope electrodes 606 and 608.

FIG. 6 shows a schematic top view of gyro electrodes 600 for measuring motions of the sensor. As depicted, the gyro electrodes 600 include x-axis gyro electrodes 606 and 608 and y-axis gyro electrodes 602 and 604. As discussed above, the variation of the capacitance between each of the gyro electrodes 600 and the corresponding component of the sensor 200 is used to measure the motion of the sensor. The gyro electrodes 600 may be mounted on the surface of the via wafer 108 (shown in FIG. 1) or within the via layer, and spaced apart from the sensor 200 by a predetermined distance.

FIG. 7 shows an enlarged view of the flexure structure 228a that allows x-axis gyro sense and z-axis accelerometer sense motions. The flexure comprises an x-axis gyro spring 704, a z-axis accelerometer spring 702 and a frame connection spring 706. As depicted, the wing portion 220a of the y-axis proof mass section 218 is connected to the proof-mass outer frame 202 via the beam 704 and the x-axis gyro spring 704, where one end of the spring 704 is attached to the wing portion 220a and the other end of the spring 704 is attached to the outer frame 202 via a linkage 703 and the z-axis accelerometer spring 702. The linkage 703 and the z-axis accelerometer spring 702 are separated from the wing portion 220a by grooves (or gaps) 705. The gaps 705 are large enough to permit the linkage 703, the x-axis gyro spring 704 and the z-axis accelerometer spring 702 to move through its design range without colliding with the wing portion 220a.

The x-axis gyro spring 704 provides a restoring torque about the y-axis when the x-axis proof mass sections 212a and 212b are torsionally excited about the y-axis, as shown in FIG. 4B. The z-axis accelerometer spring 702 acts as a torsional hinge and provides a restoring torque about the y-axis when the y-axis proof mass section 218 is accelerated along the z-axis, as shown in FIG. 5B.

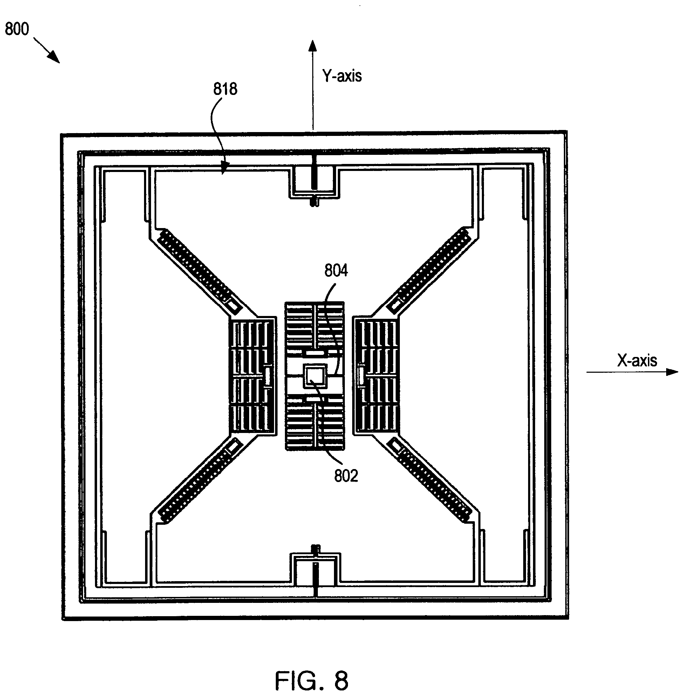

FIG. 8 shows a schematic top view of another embodiment of a sensor 800 in accordance with the present invention, where the sensor 800 has similar functions as the sensor 200 (shown in FIG. 2). As depicted, the sensor 800 is similar to the sensor 200 in FIG. 2, with the difference that the sensor 800 does not include the drive decoupling frame 232, i.e., y-axis gyroscope flexures (or beams) 804 connect the y-axis proof mass section 818 directly to the anchor 802. In this embodiment, the y-axis gyroscope beams 804 can be utilized as drive suspension beams as well. In the y-axis angular rate response mode (which is similar to the mode described in FIG. 4C), the y-axis gyroscope beams 804 are twisted about the x-axis, to thereby act as torsional hinges about the x-axis. In the drive mode, the y-axis gyroscope beams 804 deflect as fixed-guided end beams, allowing the y-axis proof mass section 818 to rotate about the z-axis. It is noted that the sensor 800 does not include a drive decoupling frame to reduce the complexity of the suspension mechanism for the proof mass.

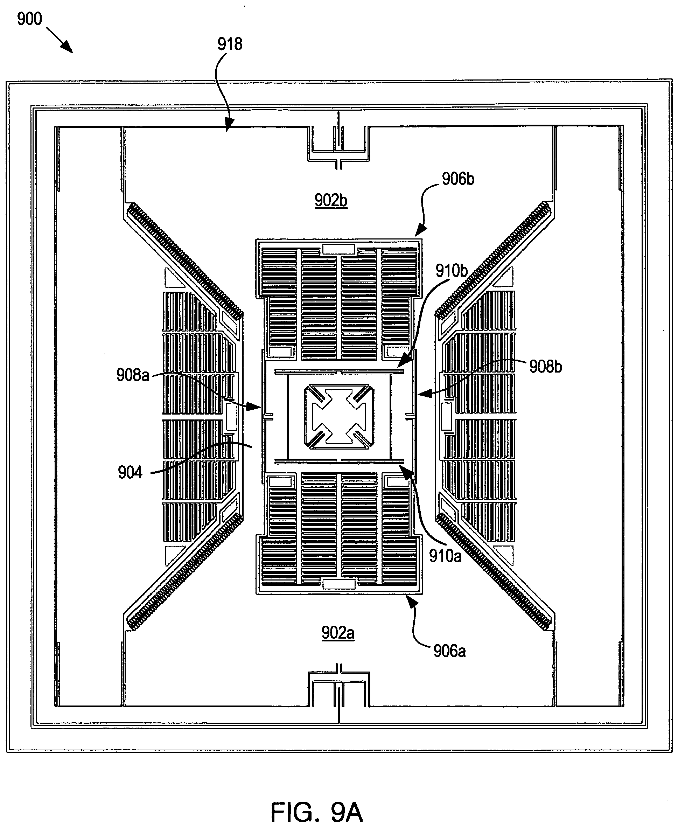

FIG. 9A shows a schematic top view of yet another embodiment of a sensor 900 in accordance with the present invention. FIG. 9B shows an enlarged view of the x-axis and y-axis accelerometer flexures of the sensor 900 in FIG. 9A. As depicted, the sensor 900 is similar to the sensor 200 in FIG. 2, with the difference that the sensor 900 includes x-axis accelerometer fixtures 908a, 908b and y-axis accelerometer flexures 910a, 910b. The sensor 900 includes a y-axis proof mass section 918 having a pair of wing portions 902a, 902b; elongated portions 904; and y-axis electrodes (or transducers) 906a, 906b for measuring the motions of the y-axis proof mass section 918. The sensor 900 also includes an anchor 946 disposed substantially at the center and a drive decoupling frame 948 connected to the anchor 946 by multiple drive beams 950.

The x-axis accelerometer flexure 908a (or 908b) includes: an elongated slit (groove or gap) 930 formed in the elongated portion 904 of the y-axis proof mass section 918; and two slits (grooves or gaps) 932 that extend from the regions around anchors 905 toward the x axis. The distal ends of the slits 932 are spaced apart from each other to form a suspension linkage 934 having a substantially T-shape. The slits 932 separate the elongated portion 904 from the frame 952, where the frame 952 has a substantially rectangular shape. The slits 930 and 932 are large enough to permit the suspension linkage 934 to move through its design range without colliding with the elongated portion 904 and the frame 952. The anchors 905 are secured to the via wafer 108 (shown in FIG. 2) and holds the stationary plates of the y-axis electrodes 906a (or 906b) in place.

The y-axis accelerometer flexure 910b (or, 910a) includes a long slit (groove or gap) 940 and two short slits (grooves or gaps) 942 that are arranged substantially parallel to the long slit 940. The gap between the two short slits 942 and the long slit 940 forms a suspension linkage 944 having a substantially T-shape. The frame 952 is separated from the drive decoupling frame 948 by the slits 940 and 942. The slits 940 and 942 are large enough to permit the suspension linakge 944 to move through its design range without colliding with the frame 952 and the drive decoupling frame 948. The x-axis accelerometer flexures 908a, 908b and the y-axis accelerometer flexures 910a, 910b are connected to the drive decoupling frame 948, and allow the accelerometer function to be decoupled from the gyroscope operation.

## Claims

1. A sensor (200; 800; 900) for measuring angular rates (Ωₓ, Ω_{y}, Ω_{z}) about x-, y-, and z-axes (x, y, z) and linear accelerations along the x-, y-, and z-axes (x, y, z), the sensor (200; 800; 900) comprising:
a wafer (108);
a micromachined layer (106) including:
a frame (202);
a pair of x-axis planar proof mass sections (212a, 212b) suspended to the frame (202) by a first flexures (216a, 216b);
a y-axis planar proof mass section (218; 818; 918), wherein the frame (202) is suspended to the y-axis planar proof mass section (218; 818; 918) by a second flexures (228a, 228b);
**characterized in that**:
the sensor comprises an anchor (103; 802; 905, 946) secured to the wafer (108) disposed beneath the x-axis planar proof mass sections (212a, 212b) and the y-axis planar proof mass section (218; 818; 918); and a pair of x-axis gyro electrodes (606, 608) and a pair of y-axis gyro electrodes (602, 604) disposed beneath the micromachined layer (106) and configured to measure a variation of capacitance between the gyro electrodes (602, 604, 606, 608) and the pair of x-axis and the y-axis planar proof mass sections (212a, 212b, 218, 818, 918), wherein:
the frame (202), the pair of x-axis planar proof mass sections (212a, 212b), and the pair of y-axis planar proof mass section (218; 818; 918) are formed in the micromachined layer (106) and are adapted to measure angular rates (Ωₓ, Ω_{y}, Ω_{z}) about the x-, y-, and z-axes and linear accelerations along the x-, y-, and z-axes (x, y, z);
the pair of x-axis planar proof mass sections (212a, 212b) includes a first pair of accelerometer electrodes (214a, 214b) disposed symmetrically to the y-axis (y), the first pair of accelerometer electrodes (214a, 214b) is configured to measure angular rates (Ω_{z}) about the z-axis (z) and linear accelerations about along the x-axis (x) perpendicular to the z-axis (z), wherein the first flexures (216a, 216b) are configured to deform under linear acceleration in the x-axis (x);
the pair of x-axis planar proof mass sections (212a, 212b) and the x-axis gyro electrodes (606, 608) are configured to measure angular rate (Ωₓ) about the x-axis (x) and linear acceleration in the z-axis (z);
the y-axis planar proof mass section (218; 818; 918) includes a second pair of accelerometer electrodes (222a, 222b; 906a, 906b) disposed symmetrically to the x-axis (x) and the second pair of accelerometer electrodes (222a, 222b; 906a, 906b) is configured to measure linear acceleration in the y-axis (y) perpendicular to the x- and z-axes (x, z), wherein the second flexures (228a, 228b) are configured to deform under linear acceleration in the y-axis (y);
the y-axis planar proof mass section (218, 818, 918) and the y-axis gyro electrodes (602, 604) are configured to measure angular rate (Ω_{y}) about the y-axis; and
the pair of x-axis planar proof mass sections (212a, 212b) and the y-axis planar proof mass section (218; 818; 918) are configured to be driven about the anchor (103; 802; 905, 946) and the z-axis (z).

2. The sensor (200; 800; 900) as recited in claim 1, further comprising:
a comb electrode (226) configured to drive the pair of x-axis and the y-axis planar proof mass sections (212a, 212b, 218, 818, 918) at a drive frequency about the z-axis (z), the micromachined layer (106) being substantially disposed on a plane normal to the z-axis (z) when the sensor (200; 800; 900) is not externally disturbed.

3. The sensor (200; 800; 900) as recited in claim 2, wherein the comb electrode (226) includes a plurality of stationary fingers (304) and a plurality of moving comb fingers (306).

4. The sensor (200; 800; 900) as recited in claim 2, wherein the y-axis planar proof mass section (218; 818; 918) includes a pair of wing portions (220a, 220b; 902a, 902b) disposed symmetrically to the x-axis (x) and the wing portions (220a, 220b; 902a, 902b) are adapted to move in opposite directions when the sensor (200; 800; 900) is disturbed at the angular rate (Ω_{y}) about the y-axis (y).

5. The sensor (200; 800; 900) as recited in claim 4,
wherein the angular rate (Ω_{y}) about the y-axis (y) is detected by measuring a variation of capacitance between the y-axis gyro electrodes (602, 604) and the pair of wing portions (220a, 220b; 902a, 902b).

6. The sensor (200; 800; 900) as recited in claim 4, wherein:
the second pair of accelerometer electrodes (222a, 222b; 906a, 906b) is respectively connected to the pair of wing portions (220a, 220b; 902a, 902b), and
the linear acceleration of the sensor (200; 800; 900) in the y-axis (y) is detected by measuring a variation of capacitance of the second pair of accelerometer electrodes (222a, 222b, 906a, 906b).

7. The sensor (200; 800; 900) as recited in claim 6, wherein each of the second pair of accelerometer electrodes_(222a, 222b; 906a, 906b) is connected to the anchor (240) secured to the wafer (108) disposed beneath the micromachined layer (103).

8. The sensor (200; 800; 900) as recited in claim 7, wherein the linear acceleration of the sensor (200; 800; 900) in the axis (z) normal to the plane is detected by measuring a variation of capacitance between the x-axis planar proof mass sections (212a, 212b) and the x-axis gyro electrodes (606, 608).

9. The sensor (200; 800; 900) as recited in claim 2, wherein the x-axis planar proof mass sections (212a, 212b) are disposed symmetrically to the y-axis (y) and the x-axis planar proof mass sections_(212a, 212b) are adapted to move in opposite directions when the sensor (200; 800; 900) is disturbed about the x- or z-axis.

10. The sensor (200; 800; 900) as recited in claim 9,
wherein the angular rate (Ωₓ) about the x-axis (x) is detected by measuring a variation of capacitance between the x-axis planar proof mass sections (212a, 212b) and the x-axis gyro electrodes (606, 608), and
the angular rate (Ω_{z}) about the z-axis (z) is detected by measuring a variation of capacitance of the first pair of accelerometer electrodes (214a, 214b).

11. The sensor (200; 800; 900) as recited in claim 9, wherein the x-axis planar proof mass sections (212a, 212b) are adapted to move in opposite directions when the sensor (200; 800; 900) is disturbed at the angular (Ω_{z}) rate about the z-axis (z) normal to the plane.

12. The sensor (200; 800; 900) as recited in claim 11, wherein:
the first pair of accelerometer electrodes (214a, 214b) is respectively connected to the x-axis planar proof mass sections (212a, 212b),
wherein the angular rate (Ω_{z}) about the z-axis (z) normal to the plane is detected by measuring a variation of capacitance in the first pair of accelerometer electrodes (214a, 214b).

13. The sensor (200; 900) as recited in claim 1, wherein the anchor (103; 946) secured to the wafer (108) and disposed beneath the micromachined layer (106) is located substantially at a center of the sensor (200; 900); the sensor further comprising:
an inner frame (232; 948) connected to the anchor (103; 946) by a plurality of suspension beams (236; 950); and
a plurality of flexures (230; 908a, 908b, 910a, 910b) connected to the inner frame (232; 948) and the y-axis proof mass section (218; 918) and adapted to provide a restoring force to the y-axis proof mass section (218; 918).

14. The sensor (200; 900) as recited in claim 13, further comprising:
a pair of gyroscope flexures (228a, 228b) connected to the y-axis planar proof mass section (218; 918) and to the frame (202) and adapted to provide a restoring torque to the y-axis planar proof mass section (218; 918).

15. The sensor (200; 800; 900) as recited in claim 1, further comprising:
a pair of flexures (228a, 228b) connected to the frame (202) and the y-axis planar proof mass section (218; 818; 918), each said flexure (228a, 228b) including a gyro spring (704) for providing a restoring torque about the y-axis (y) and two accelerometer springs (702) for providing a restoring torque about the y-axis (y).

## Patentansprüche

1. Sensor (200; 800; 900) zum Messen von Winkelgeschwindigkeiten (Ωₓ, Ω_{y}, Ω_{z}) um die x-, y- und z-Achse (x, y, z) und von linearen Beschleunigungen entlang der x-, y- und z-Achse (x, y, z), wobei der Sensor 200; 800; 900) aufweist:
einen Wafer (108);
eine mikromechanisch hergestellte Schicht (106) umfassend:
einen Rahmen (202);
ein Paar in der x-Achse planare Probemassenabschnitte (212a, 212b), die am Rahmen 202) an ersten Biegeelementen (216a, 216b) aufgehängt sind;
einen in der y-Achse planaren Probemassenabschnitt (218; 818; 918), wobei der Rahmen (202) an zweiten Biegeelementen (228a, 228b) am in der y-Achse planaren Probemassenabschnitt (218; 818; 918) aufgehängt ist;
**dadurch gekennzeichnet, dass**
der Sensor einen Anker (103; 802; 905; 946) aufweist, der am Wafer (108) befestigt ist, der unterhalb der in der x-Achse planaren Probemassenabschnitte (212a, 212b) und dem in der y-Achse planaren Probemassenabschnitt (218; 818; 918) angeordnet ist; und ein Paar Gyro-Elektroden (606, 608) für die x-Achse sowie ein Paar Gyro-Elektroden (602, 604) für die y-Achse, die unterhalb der mikromechanisch hergestellten Schicht (106) angeordnet und konfiguriert sind, eine Änderung der Kapazität zwischen den Gyro-Elektroden (602, 604, 606, 608) und dem in der x-Achse bzw. y-Achse planaren Paar Probemassenabschnitte (212a, 212b, 218, 818, 918) zu messen, wobei:
der Rahmen (202), das Paar der in der x-Achse planaren Probemassenabschnitte (212a, 212b) und das Paar der in der y-Achse planaren Probemassenabschnitte (218; 818; 918) in der mikromechanisch hergestellten Schicht (106) ausgebildet und dazu eingerichtet sind, Winkelgeschwindigkeiten (Ωₓ, Ω_{y}, Ω_{z}) um x-, y- und z-Achse (x, y, z) und lineare Beschleunigungen entlang der x-, y- und z-Achse zu messen;
das Paar der in der x-Achse planaren Probemassenabschnitte (212a, 212b) ein erstes Paar Beschleunigungsmesselektroden (214a, 214b) umfasst, die symmetrisch zur y-Achse (y) angeordnet sind, wobei das erste Paar Beschleunigungsmesselektroden (214a, 214b) zum Messen von Winkelgeschwindigkeiten (Ω_{z}) um die z-Achse (z) und von linearen Beschleunigungen entlang der x-Achse (x) senkrecht zur z-Achse (z) konfiguriert ist, wobei die ersten Biegeelemente (216a, 216b) zur Verformung bei linearer Beschleunigung in der x-Achse (x) konfiguriert sind;
das Paar der in der x-Achse planaren Probemassenabschnitte (212a, 212b) und die Gyro-Elektroden (606, 608) für die x-Achse zum Messen der Winkelgeschwindigkeit (Ωₓ) um die x-Achse (x) und der linearen Beschleunigung entlang der z-Achse (z) konfiguriert sind;
der in der y-Achse planare Probemassenabschnitt (218; 818; 918) ein zweites Paar Beschleunigungsmesselektroden (222a, 222b; 906a, 906b) umfasst, die symmetrisch zur x-Achse (x) angeordnet sind, und das zweite Paar Beschleunigungsmesselektroden (222a, 222b; 906a, 906b) zum Messen der linearen Beschleunigung entlang der y-Achse (y) senkrecht zur x- und z- Achse (x, z) konfiguriert ist, wobei die zweiten Biegeelemente (228a, 228b) zur Verformung bei linearer Beschleunigung in der y-Achse (y) konfiguriert sind;
der in der y-Achse planare Probemassenabschnitt (218, 818, 918) und die Gyro-Elektroden (602, 604) zum Messen der Winkelgeschwindigkeit (Ω_{y}) um die y-Achse konfiguriert sind; und
das Paar der in der x-Achse planaren Probemassenabschnitte (212a, 212b) und der in der y-Achse planaren Probemassenabschnitt (218, 818, 918) konfiguriert sind, um den Anker (103; 802; 905, 946) und die z-Achse (z) angetrieben zu werden.

2. Sensor (200; 800; 900) nach Anspruch 1, ferner aufweisend:
eine Kammelektrode (226), die zum Antreiben des Paares der in der x-Achse und in der y-Acchse planaren Probemassenabschnitte (212a, 212b, 218, 818, 918) mit einer Antriebsfrequenz um die z-Achse (z) konfiguriert ist, wobei die mikromechanisch hergestellte Schicht (106) im Wesentlichen in einer Ebene senkrecht zur z-Achse (z) angeordnet ist, wenn der Sensor (200; 800; 900) nicht extern gestört wird.

3. Sensor (200; 800; 900) nach Anspruch 2, wobei die Kammelektrode (226) eine Mehrzahl stationärer Finger (304) und eine Mehrzahl beweglicher Kammfinger (306) aufweist.

4. Sensor (200; 800; 900) nach Anspruch 2, wobei der in der y-Achse planare Probemassenabschnitt (218; 818; 918) ein Paar Flügelabschnitte (220a, 220b; 902a, 902b) umfasst, die symmetrisch zur x-Achse (x) angeordnet sind, und die Flügelabschnitte (220a, 220b; 902a, 902b) so eingerichtet sind, dass sie sich in entgegengesetzten Richtungen bewegen, wenn der Sensor (200; 800; 900) bei der Winkelgeschwindigkeit (Ω_{y}) um die y-Achse (y) gestört wird.

5. Sensor (200; 800; 900) nach Anspruch 4, wobei die Winkelgeschwindigkeit (Ω_{y}) um die y-Achse (y) durch Messen einer Änderung der Kapazität zwischen den Gyro-Elektroden (602, 604) für die y-Achse und dem Paar Flügelabschnitten (220a, 220b; 902a, 902b) detektiert wird.

6. Sensor (200; 800; 900) nach Anspruch 4, wobei das zweite Paar Beschleunigungsmesselektroden (222a, 222b; 906a, 906b) jeweils mit dem Paar Flügelabschnitten (220a, 220b; 902a, 902b) verbunden ist, und
die lineare Beschleunigung des Sensors (200; 800; 900) entlang der y-Achse (y) durch Messen einer Änderung der Kapazität des zweiten Paares Beschleunigungsmesselektroden (222a, 222b; 906a, 906b) detektiert wird.

7. Sensor (200; 800; 900) nach Anspruch 6, wobei jede Elektrode des zweiten Paares Beschleunigungsmesselektroden (222a, 222b; 906a, 906b) mit dem am Wafer (108) unterhalb der mikromechanisch hergestellten Schicht (106) befestigten Anker (240) verbunden ist.

8. Sensor (200; 800; 900) nach Anspruch 7, wobei die lineare Beschleunigung des Sensors (200; 800; 900) entlang der Achse (z) senkrecht zur Ebene durch Messen einer Änderung der Kapazität zwischen den in der x-Achse planaren Probemassenabschnitten (212a, 212b) und den Gyro-Elektroden (606, 608) für die x-Achse detektiert wird.

9. Sensor (200; 800; 900) nach Anspruch 2, wobei die in der x-Achse planaren Probemassenabschnitte (212a, 212b) symmetrisch zur y-Achse (y) angeordnet sind, und die in der x-Achse planaren Probemassenabschnitte (212a, 212b) dazu eingerichtet sind, sich in entgegengesetzten Richtungen zu bewegen, bei um die x-oder z-Achse gestörtem Sensor (200; 800; 900) wird.

10. Sensor (200; 800; 900) nach Anspruch 9, wobei die Winkelgeschwindigkeit (Ωₓ) um die x-Achse (x) durch Messen einer Änderung der Kapazität zwischen den in der x-Achse planaren Probemassenabschnitten (212a, 212b) und den Gyro-Elektroden (606, 608) für die x-Achse und dem Paar Flügelabschnitten (220a, 220b; 902a, 902b) detektiert wird, und
wobei die Winkelgeschwindigkeit (Ω_{z})um die z-Achse (z) durch Messen einer Änderung der Kapazität des ersten Paares Beschleunigungsmesselektroden (214a, 214b) detektiert wird.

11. Sensor (200; 800; 900) nach Anspruch 9, wobei die in der x-Achse planaren Probemassenabschnitte (212a, 212b) dazu eingerichtet sind, sich in entgegengesetzten Richtungen zu bewegen, wenn der Sensor (200; 800; 900) bei der Winkelgeschwindigkeit (Ω_{z}) um die z-Achse (z) senkrecht zur Ebene gestört wird.

12. Sensor (200; 800; 900) nach Anspruch 11, wobei:
das erste Paar Beschleunigungsmesselektroden (214a, 214b) jeweils mit den in der x-Achse planaren Probemassenabschnitten (212a, 212b) verbunden ist,
wobei die Winkelgeschwindigkeit (Ω_{z}) um die z-Achse (z) senkrecht zur Ebene durch Messen einer Änderung der Kapazität des ersten Paares Beschleunigungsmesselektroden (214a, 214b) detektiert wird.

13. Sensor (200; 900) nach Anspruch 1, wobei sich der am Wafer (108) befestigte und unterhalb der mikromechanisch hergestellten Schicht (106) angeordnete Anker (103; 946) im Wesentlichen in der Mitte des Sensors (200; 900) befindet; wobei der Sensor ferner aufweist:
einen inneren Rahmen (232; 948), der mit dem Anker (103; 946) durch eine Mehrzahl Aufhängungsbänder (236; 950) verbunden ist; und
eine Mehrzahl Biegeelemente (230; 908a, 908b, 910a, 910b), die mit dem inneren Rahmen (232; 948) und dem in der y-Achse planaren Probemassenabschnitt (218, 918) verbunden und dazu eingerichtet sind, den in der y-Achse planaren Probemassenabschnitt (218, 918) mit einer Rückstellkraft zu beaufschlagen.

14. Sensor (200; 900) nach Anspruch 13, ferner aufweisend:
ein Paar Biegeelemente (228a, 228b), die mit dem in der y-Achse planaren Probemassenabschnitt (218 918) und dem Rahmen (202) verbunden und dazu eingerichtet sind, den in der y-Achse planaren Probemassenabschnitt (218; 918) mit einem Rückstellmoment zu beaufschlagen.

15. Sensor (200; 800; 900) nach Anspruch 1, ferner aufweisend:
ein Paar Biegeelemente (228a, 228b), die mit dem Rahmen (202) und dem in der y-Achse planaren Probemassenabschnitt (218; 818; 918) verbunden sind, wobei jedes Biegeelement (228a, 228b) eine Gyro-Feder (704) umfasst, um die y-Achse (y) mit einem Rückstellmoment zu beaufschlagen sowie zwei Beschleunigungsmesser-Federn (702), um die y-Achse (y) mit einem Rückstellmoment zu beaufschlagen zu beaufschlagen.

## Revendications

1. Capteur (200 ; 800 ; 900) pour mesurer des vitesses angulaires (Ωₓ, Ω_{y}, Ω_{z}) autour d'axes x, y, et z (x, y, z) et des accélérations linéaires le long des axes x, y, et z (x, y, z), le capteur (200 ; 800 ; 900) comprenant :
une tranche (108) ;
une couche micro-usinée (106) incluant :
un cadre (202) ;
une paire de sections (212a, 212b) de masse d'épreuve planes d'axe x suspendues au cadre (202) par des premiers joints flexibles (216a, 216b) ;
une section (218 ; 818 ; 918) de masse d'épreuve plane d'axe y, dans lequel le cadre (202) est suspendu à la section (218 ; 818 ; 918) de masse d'épreuve plane d'axe y par des deuxièmes joints flexibles (228a, 228b) ;
**caractérisé en ce que** :
le capteur comprend un ancrage (103 ; 802 ; 905, 946) fixé à la tranche (108) disposé en-dessous des sections (212a, 212b) de masse d'épreuve planes d'axe x et de la section (218 ; 818 ; 918) de masse d'épreuve plane d'axe y ; et une paire d'électrodes (606, 608) de gyroscope d'axe x et une paire d'électrodes (602, 604) de gyroscope d'axe y disposées en-dessous de la couche micro-usinée (106) et configurées pour mesurer une variation de capacitance entre les électrodes (602, 604, 606, 608) de gyroscope et la paire de sections de masse d'épreuve planes d'axe x et la section de masse d'épreuve plane d'axe y (212a, 212b, 218, 818, 918), dans lequel :
le cadre (202), la paire de sections (212a, 212b) de masse d'épreuve planes d'axe x, et la section (218 ; 818 ; 918) de masse d'épreuve plane d'axe y sont formés dans la couche micro-usinée (106) et sont adaptés à mesurer des vitesses angulaires (Ωₓ, Ω_{y}, Ω_{z}) autour des axes x, y, et z et des accélérations linéaires le long des axes x, y, et z (x, y, z) ;
la paire de sections (212a, 212b) de masse d'épreuve planes d'axe x inclut une première paire d'électrodes (214a, 214b) d'accéléromètre disposées symétriquement sur l'axe y (y), la première paire d'électrodes (214a, 214b) d'accéléromètre est configurée pour mesurer des vitesse angulaires (Ω_{z}) autour de l'axe z (z) et des accélérations linéaires le long de l'axe x (x) perpendiculaire à l'axe z (z), dans lequel les premiers joints flexibles (216a, 216b) sont configurés pour se déformer sous une accélération linéaire dans l'axe x (x) ;
la paire de sections (212a, 212b) de masse d'épreuve planes d'axe x et les électrodes (606, 608) de gyroscope d'axe x sont configurées pour mesurer une vitesse angulaire (Ωₓ) autour de l'axe x (x) et une accélération linéaire dans l'axe z (z) ;
la section (218 ; 818 ; 918) de masse d'épreuve plane d'axe y inclut une deuxième paire d'électrodes (222a, 222b ; 906a, 906b) d'accéléromètre disposées symétriquement sur l'axe x (x) et la deuxième paire d'électrodes (222a, 222b ; 906a, 906b) d'accéléromètre est configurée pour mesurer une accélération linéaire dans l'axe y (y) perpendiculaire aux axes x et z (x, z), dans lequel les deuxièmes joints flexibles (228a, 228b) sont configurés pour se déformer sous une accélération linéaire dans l'axe y (y) ;
la section (218 ; 818 ; 918) de masse d'épreuve plane d'axe y et les électrodes (602, 604) de gyroscope d'axe y sont configurées pour mesurer une vitesse angulaire (Ω_{y}) autour de l'axe y ; et
la paire de sections (212a, 212b) de masse d'épreuve planes d'axe x et la section (218 ; 818 ; 918) de masse d'épreuve plane d'axe y sont configurées pour être pilotées autour de l'ancrage (103 ; 802 ; 905, 946) et de l'axe z (z).

2. Capteur (200 ; 800 ; 900) selon la revendication 1, comprenant en outre :
une électrode (226) en peigne configurée pour piloter la paire de sections de masse d'épreuve planes d'axe x et la section de masse d'épreuve plane d'axe y (212a, 212b, 218, 818, 918) à une fréquence pilote autour de l'axe z (z), la couche micro-usinée (106) étant sensiblement disposée sur un plan normal à l'axe z (z) lorsque le capteur (200 ; 800 ; 900) n'est pas extérieurement perturbé.

3. Capteur (200 ; 800 ; 900) selon la revendication 2, dans lequel l'électrode (226) en peigne inclut une pluralité de doigts fixes (304) et une pluralité de doigts de peigne mobiles (306).

4. Capteur (200 ; 800 ; 900) selon la revendication 2, dans lequel la section (218 ; 818 ; 918) de masse d'épreuve plane d'axe y inclut une paire de parties (220a, 220b ; 902a, 902b) de patte disposées symétriquement sur l'axe x (x) et les parties (220a, 220b ; 902a, 902b) de patte sont adaptées à se déplacer dans des sens opposés lorsque le capteur (200 ; 800 ; 900) est perturbé à la vitesse angulaire (Ω_{y}) autour de l'axe y (y).

5. Capteur (200 ; 800 ; 900) selon la revendication 4,
dans lequel la vitesse angulaire (Ω_{y}) autour de l'axe y (y) est détectée en mesurant une variation de capacitance entre les électrodes (602, 604) de gyroscope d'axe y et la paire de parties (220a, 220b ; 902a, 902b) de patte.

6. Capteur (200 ; 800 ; 900) selon la revendication 4, dans lequel :
la deuxième paire d'électrodes (222a, 222b ; 906a, 906b) d'accéléromètre est respectivement connectée à la paire de parties (220a, 220b ; 902a, 902b) de patte, et
l'accélération linéaire du capteur (200 ; 800 ; 900) dans l'axe y (y) est détectée en mesurant une variation de capacitance de la deuxième paire d'électrodes (222a, 222b ; 906a, 906b) d'accéléromètre.

7. Capteur (200 ; 800 ; 900) selon la revendication 6, dans lequel chacune de la deuxième paire d'électrodes (222a, 222b ; 906a, 906b) d'accéléromètre est connectée à l'ancrage (240) fixé sur la tranche (108) disposée en-dessous de la couche micro-usinée (103).

8. Capteur (200 ; 800 ; 900) selon la revendication 7, dans lequel l'accélération linéaire du capteur (200 ; 800 ; 900) dans l'axe z (z) perpendiculaire au plan est détectée en mesurant une variation de capacitance entre les sections (212a, 212b) de masse d'épreuve planes d'axe x et les électrodes (606, 608) de gyroscope d'axe x.

9. Capteur (200 ; 800 ; 900) selon la revendication 2, dans lequel les sections (212a, 212b) de masse d'épreuve planes d'axe x sont disposés symétriquement sur l'axe y (y) et les sections (212a, 212b) de masse d'épreuve planes d'axe x sont adaptées à se déplacer dans des sens opposés lorsque le capteur (200 ; 800 ; 900) est perturbé autour de l'axe x ou z.

10. Capteur (200 ; 800 ; 900) selon la revendication 9,
dans lequel la vitesse angulaire (Ωₓ) autour de l'axe x (x) est détectée en mesurant une variation de capacitance entre les sections (212a, 212b) de masse d'épreuve planes d'axe x et les électrodes (606, 608) de gyroscope d'axe x, et
la vitesse angulaire (Ω_{z}) autour de l'axe z (z) est détectée en mesurant une variation de capacitance de la première paire d'électrodes (214a, 214b) d'accéléromètre.

11. Capteur (200 ; 800 ; 900) selon la revendication 9, dans lequel les sections (212a, 212b) de masse d'épreuve planes d'axe x sont adaptées à se déplacer dans des sens opposés lorsque le capteur (200 ; 800 ; 900) est perturbé à la vitesse angulaire (Ω_{z}) autour de l'axe z (z) normal au plan.

12. Capteur (200 ; 800 ; 900) selon la revendication 11, dans lequel :
la première paire d'électrodes (214a, 214b) d'accéléromètre est respectivement connectée aux sections (212a, 212b) de masse d'épreuve planes d'axe x,
dans lequel la vitesse angulaire (Ω_{z}) autour de l'axe z (z) normal au plan est détectée en mesurant une variation de capacitance dans la première paire d'électrodes (214a, 214b) d'accéléromètre.

13. Capteur (200 ; 900) selon la revendication 1, dans lequel l'ancrage (103 ; 946) fixé sur la tranche (108) et disposé en-dessous de la couche micro-usinée (106) est situé sensiblement en un centre du capteur (200 ; 900) ; le capteur comprenant en outre :
un cadre intérieur (232 ; 948) connecté à l'ancrage (103 ; 946) par une pluralité de balanciers de suspension (236 ; 950) ; et
une pluralité de joints flexibles (230 ; 908a, 908b, 910a, 910b) connectés au cadre intérieur (232 ; 948) et à la section (218 ; 918) de masse d'épreuve d'axe y et adaptés à fournir une force de restauration à la section (218 ; 918) de masse d'épreuve d'axe y.

14. Capteur (200 ; 900) selon la revendication 13, comprenant en outre :
une paire de joints flexibles (228a, 228b) de gyroscope connectés à la section (218 ; 918) de masse d'épreuve plane d'axe y et au cadre (202) et adaptés à fournir un couple de restauration à la section (218 ; 918) de masse d'épreuve plane d'axe y.

15. Capteur (200 ; 800 ; 900) selon la revendication 1, comprenant en outre :
une paire de joints flexibles (228a, 228b) connectés au cadre (202) et à la section (218 ; 818 ; 918) de masse d'épreuve plane d'axe y, chaque dit joint flexible (228a, 228b) incluant un ressort (704) de gyroscope pour fournir un couple de restauration autour de l'axe y (y) et deux ressorts (702) d'accéléromètre pour fournir un couple de restauration autour de l'axe y (y).
